# EUROPÄISCHE PATENTANMELDUNG

(11) **EP 3 410 340 A1**
(43) Veröffentlichungstag der Anmeldung: **05.12.2018**
(21) Anmeldenummer: 17173624.2
(22) Anmeldetag: 31.05.2017
(51) Int. Cl.: G06K 7/10, G06K 19/06, G03F 9/00

(54) **VERFAHREN ZUM AUSRICHTEN EINER FOLIE ÜBER EINEN CODE**

(71) Anmelder: Greiner Bio-One GmbH, 4550 Kremsmünster (AT)
(72) Erfinder: RAMPETSREITER, Christoph, 4550 Kremsmünster (AT)
(74) Vertreter: Burger, Hannes

(57) **Zusammenfassung**

Die Erfindung betrifft ein Verfahren zum Ausrichten einer zweiten Folie (3) über einen ersten Code (1),
welcher erste Code (1) auf einem Objekt (13) aufgebracht ist, wobei
die Lage des ersten Codes (1) durch zumindest einen detektierbaren ersten Codepunkt (6) des ersten Codes (1) und einen detektierbaren zweiten Codepunkt (7) des ersten Codes (1) definiert wird und,
die Lage der zweiten Folie (4) durch zumindest einen detektierbaren ersten Linienpunkt (8) und einen zweiten Linienpunkt (9) definiert wird, sodass
die zweite Folie (4) während des Legens der zweiten Folie (4) über den ersten Code (1) zu dem ersten Code (1) ausrichtbar ist.

## Beschreibung

Verfahren, bei welchen ein auf einem Objekt aufgebrachter Code durch eine Folie überdeckt wird, werden unter anderem in medizinischen Bereichen angewandt. Die Objekte sind hierbei eine Probe aufnehmende Behälter, welche mit einem Code versehen sind, die mittels Auslesevorrichtungen nach dem Stand der Technik ausgelesen werden. Es kommen hierbei unterschiedliche Systeme von Codes zum Einsatz, sodass es notwendig ist, die Codes durch Folien zu überdecken. Die Folien können gegebenenfalls einen weiteren Code umfassen, der für ein anderes System als der bestehende Code adaptiert ist.

Das Auslesen der Codes - unabhängig ob es sich hier um einen bestehenden Code oder um einen durch die Folie aufgebrachten weiteren Code handelt - muss sehr rasch erfolgen. Das Auslesen der Codes erfolgt in der Regel maschinell. Es ist aus diesem Grund notwendig, dass die Codes unverzerrt und exakt zu der Geometrie des Objektes, im oben geschilderten Fall zu der Geometrie des Behälters ausgerichtet sind, da das Objekt beziehungsweise der Behälter in der Regel maschinell aufgenommen und zu einer Lesevorrichtung transportiert und gehalten wird.

Nach dem Stand der Technik sind verschiedene Arten von Codes bekannt. Es gibt eindimensionale Codes wie beispielsweise einen Barcode, zweidimensionale Codes wie beispielsweise QR-Codes oder auch dreidimensionale Codes.

Nach dem Stand der Technik sind die folgenden Verfahren zum Legen einer Folie über eine bestehende Folie bekannt.

EP1877317 offenbart ein Verfahren zur Ausrichtung eines Schildes auf einem Behälter. Das Schild und der Behälter umfassen hierzu Ausrichtungssymbole, mittels welcher das Schild relativ zum Behälter ausgerichtet wird. Die Ausrichtungssymbole sind nicht ein Teil eines auf dem Schild aufgebrachten Codes.

In EP0979777 werden ebenso ein an einem Behälter oder auf einem ersten Schild angebrachtes Ausrichtungssymbol mit einem am zweiten Schild angebrachten Ausrichtungssymbol in Übereinstimmung gebracht. Die Ausrichtungssymbole sind nicht Teil von auf den Schildern aufgebrachten Codes.

Die erwähnten Verfahren EP1877317 und EP0979777 unterscheiden sich von dem im Folgenden offenbarten erfindungsgemäßen Verfahren, dass Ausrichtungssymbole und nicht Barcodes oder ähnliche Codes zum Ausrichten verwendet werden.

In JP2012240693 wird die Kante eines auf einem Probenröhrchen befestigten Aufklebers aus der erfassten Kantenposition eines Barcodes anhand eines vorgegebenen Abstandes errechnet, um anschließend einen weiteren Aufkleber über den bestehenden Aufkleber während einer Rotation des Röhrchens zu legen und einen sich in achsialer Richtung des Probenröhrchens erstreckenden Freiraum freizuhalten. JP2012240693 erwähnt keine Ausrichtung des weiteren Aufklebers in Bezug auf die ermittelte Kante.

Dieses Verfahren basiert darauf, dass das Röhrchen während der Durchführung des Verfahrens in einer korrekten Position gehalten wird. Es findet sich in JP2012240693 kein Hinweis auf eine Ausrichtung des aufzubringenden Codes in Bezugnahme auf den aufgebrachten Code.

In EP2439143A1 ist ein Verfahren offenbart, bei welchem die Kante des weiteren Aufklebers an eine zu detektierende Kante eines auf einem Proberöhrchen aufgeklebten Aufklebers aufgebracht wird. Hier besteht das Problem, dass die Kante des bestehenden Aufklebers verändert sein kann, sodass der weitere Aufkleber und in Folge der Barcode des weiteren Aufklebers auf dem Behälter nicht korrekt positioniert werden.

Bei dem in US2006277269A1 offenbarten Verfahren wird der Behälter genau zu einer Kante eines Schildes geführt und anschließend das Schild am Behälter befestigt. Dieses Verfahren löst nicht das Problem des exakten Positionierens des Schildes zu einem am Behälter existierenden Code.

JP2002255140 beschreibt ein Verfahren zum Erzeugen von Kennzeichen, die auch Anweisungen für nach dem Erzeugen des Kennzeichens abzulaufende Tätigkeiten umfassen.

EP2685397A1 betrifft ein Verfahren zur auftragsgeberseitigen Erstellung von Codes für Kennzeichen.

US8168033B1 offenbart eine Vorrichtung zum Erstellen und Aufbringen von Kennzeichen auf Objekte, wobei das Problem des Ausrichtens in US8168033B1 nicht behandelt wird.

In JP2008302934A wird wiederum die Kante des bestehenden Schildes detektiert und nicht ein bestehender Code detektiert.

WO2006050319A2 offenbart ein Schild mit einer Füllstandsanzeige.

DE19927668 offenbart eine Ausrichtung eines Emblems auf einer Flasche zu einer Ausrichtungsmarkierung, welche Ausrichtungsmarkierung durch eine Farbmarkierung gebildet wird (siehe Anspruch 1 von DE19927668A1). Die Farbmarkierung ist nicht Teil eines Codes.

US6419782 offenbart eine Vorrichtung zum Anbringen von Etiketten über bestehende Etiketten von einem Artikel, wobei mittels der Vorrichtung die Position des bestehenden Etiketts bestimmt wird und eine Einheit zum Aufbringen des neuen Etikettes aus einer Anzahl von derartigen Einheiten der Vorrichtung ausgewählt wird (siehe Anspruch 1 von US6419782).

DE4237577A1 offenbart eine Einrichtung zum Markieren eines Behälters unter einer derartigen Ausrichtung des Behälters, dass eine neue Markierung nicht überlappend mit einer bestehenden Markierung aufgebracht wird (siehe Anspruch 1 von DE4237577A1).

DE102014224519 offenbart eine Vorrichtung zum Aufbringen eines Etiketts auf Basis einer Behälterausrichtung nach einem ersten Ausrichtungsmerkmal und einem zweiten Ausrichtungsmerkmal an einem Behälterverschluss.

WO2010022838 (EP2328813) betrifft ebenso eine Vorrichtung zum Ausrichten eines Behälters in Bezug auf sein Verschlusselement.

WO03024808 offenbart eine Vorrichtung zum Ausrichten eines Behälters mit einer Längsachse durch Drehen, sodass der Behälter in eine Soll-Ausrichtung gebracht wird und anschließend die Etiketten auf den Behälter aufgebracht werden.

DE202005006755 offenbart eine Vorrichtung zum Ausrichten eines Behälters zu einem Merkmal des Behälterverschlusses, um den Behälter anschließend zu etikettieren.

Auf Etiketten ist eine Vielzahl von Informationen aufgedruckt. Insbesondere bei der Verwendung der Etiketten im Bereich des Gesundheitswesens wird die gesamte Etikettenfläche zum Festhalten von Information genutzt.

Einerseits stellen die auf der Etikettenfläche aufgebrachten Markierungen zum Ausrichten eines Etiketts hinsichtlich der angestrebten Nutzung der Etikettenfläche zum Festhalten von möglichst viel Informationen eine nicht optimale Nutzung der Etikettenfläche dar. Auf den Etiketten oder auf den Behältern aufgedruckte Codes müssen weiters eine gewisse Größe auf weisen, um durch Lesegeräte nach dem Stand der Technik fehlerfrei und gut auslesbar zu sein. Ein Objekt kann weiters mehrere Codes umfassen.

Andererseits sind diese Markierungen nach dem Stand der Technik notwendig, um die Etiketten exakt ausrichten zu können und so eine rasche automatisierte Lesbarkeit der festgehaltenen Informationen zu ermöglichen.

Gleiches gilt für die in der Medizin verwendeten Behälter, deren Oberfläche zum Festhalten von Informationen verwendet wird.

Ein Festhalten von Informationen kann nach dem Stand der Technik durch ein Niederschreiben von Information auf dem Behälter oder durch Abspeichern von Information in einer Datenbank erfolgen. Eine in einer Datenbank abgespeicherte Information ist nach dem Auslesen eines am Behälter oder am Etikett angebrachten Codes abrufbar.

Der oben angeführte Nachteil nach dem Stand der Technik wird durch das erfindungsgemäße Verfahren überwunden.

Erfindungsgemäß wird die der Erfindung zu Grunde liegende Aufgabe dadurch gelöst, dass die Lage des ersten Codes durch zumindest einen detektierbaren ersten Codepunkt des ersten Codes und einen detektierbaren zweiten Codepunkt des ersten Codes definiert wird und, die Lage der zweiten Folie durch zumindest einen detektierbaren ersten Linienpunkt und einen zweiten Linienpunkt definiert wird, sodass die zweite Folie während des Legens der zweiten Folie über den ersten Code zu dem ersten Code ausrichtbar ist.

Das erfindungsgemäße Verfahren basiert auf dem Grundgedanken des Verwendens des Codes auch als ein Element zum Ausrichten der zweiten Folie. Das erfindungsgemäße Verfahren zeichnet sich dadurch aus, dass durch das Verwenden des Codes beziehungsweise der Codepunkte aus dem Code keine zusätzlichen Markierungspunkte zum Ausrichten angebracht werden müssen, wodurch ein Platz gespart werden kann, welcher Platz zum Festhalten von Informationen verwendet werden kann. Dem Code, welcher ursprünglich die Funktion des Festhaltens von einer Information hat, wird die weitere Funktion einer Markierung zum Ausrichten zugewiesen.

Alternativ oder ergänzend hierzu kann die Aufgabenstellung erfindungsgemäß auch dadurch gelöst werden, dass die Lage des ersten Codes durch zumindest einen ersten Codepunkt des ersten Codes und durch einen ersten Objektpunkt des Objektes definiert wird und die Lage der zweiten Folie durch zumindest einen detektierbaren ersten Linienpunkt und einen zweiten Linienpunkt definiert wird, sodass die zweite Folie während des Legens der zweiten Folie über den ersten Code zu dem ersten Code ausrichtbar ist.

Im Unterschied zu dem oben beschriebenen Verfahren wird bei dem erfindungsgemäßen Alternativverfahren die Lage des ersten Codes durch einen ersten Codepunkt, welcher erster Codepunkt Teil des am Objekt angebrachten Codes ist, und durch einen Objektpunkt außerhalb des Codes definiert.

Der zweite Lösungsansatz basiert ebenso auf dem Grundgedanken des Verwendens des Codes als ein Element zum Ausrichten. Der Fachmann ist in der Lage, die Verfahren gemäß den beiden Lösungsansätzen miteinander zu kombinieren oder einander nachfolgend zur Ausrichtung der zweiten Folie über den ersten Code anzuwenden. Durch die Kombination der Verfahren gemäß den beiden Lösungsansätzen kann die Genauigkeit des Ausrichtens der zweiten Folie über dem ersten Code noch weiter gesteigert werden.

Das erfindungsgemäße Verfahren kann auch die Verfahrensschritte umfassen, dass durch den ersten Codepunkt und durch den zweiten Codepunkt ein geometrisches Element definiert wird und durch den ersten Linienpunkt und durch den zweiten Linienpunkt eine Linie definiert wird, sodass die Linie während des Legens der Folie zu dem geometrischen Element in einem definierten Winkel alpha und mit einem definierten Schnittpunkt des geometrischen Elements und der Linie durch Richten des Objektes oder der zweiten Folie ausgerichtet und gegebenenfalls um einen Abstand versetzt wird.

Das erfindungsgemäße Verfahren wird vorzugsweise durch die Implementierung eines Computers durchgeführt. Die Codepunkte und Linienpunkte sind mittels Verfahren nach dem Stand der Technik berührungslos detektierbar und werden anschließend in ein Koordinatensystem eingetragen. Über das Koordinatensystem ist die Lage der angeführten Punkte und des durch die angeführten Punkte definierten geometrischen Elementes beziehungsweise der durch diese definierten Line bekannt.

Das Objekt und die zweite Folie werden während des erfindungsgemäßen Verfahrens durch eine geeignete Objekthalterung beziehungsweise Folienhalterung gehalten. Über die Objekthalterung ist die Position des Objektes innerhalb des verwendeten Koordinatensystems und relativ zu der Folie stellbar. Die Folienhalterung erlaubt ein Stellen der Folie innerhalb des verwendeten Koordinatensystems und relativ zu der Folie. Da das Stellen des Objektes und der Folie rechnergesteuert erfolgt, ist ein Vorhandensein des geometrischen Elements am Objekt oder der Linie auf der zweiten Folie nicht zwingend. Das geometrische Element und/oder die Linie kann sohin auch virtuell in ein computerimplementiertes Verfahren eingehen.

Die Codepunkte und/oder die Objektpunkte werden auf die Oberfläche des Objektes in Form von Vorsprüngen aufgebracht und/oder in die Oberfläche des Objektes in Form von Vertiefungen eingearbeitet.

Der Code umfassend den ersten Codepunkt und den zweiten Codepunkt kann auf die Oberfläche des Objektes aufgedruckt sein. Beim Aufdrucken des Codes auf die Oberfläche des Objektes entsteht eine Erhebung.

Der Objektpunkt kann eine Erhebung in einem Vertiefungsbereich sein, welche Erhebung durch die Herstellung des Objektes nach dem Spritzgussverfahren bedingt ist.

Der Objektpunkt kann auch durch eine Verschlusskappe für den Behälter ausgebildet sein. Eine Verschlusskappe kann detektierbare Vorsprünge oder Rillen umfassen, welche als Objektpunkte dienen können.

Die Offenbarung der Erfindung beschränkt das Verfahren keinesfalls darauf, dass ausschließlich punktförmige Vorsprünge, Vertiefungen oder sonstige Markierungen als Objektpunkte dienen können. Es können sämtliche geometrische Formen wie Kreise, Linien et cetera als Objektpunkte herangezogen werden.

Der erste Code kann direkt auf die Oberfläche des Objektes oder über eine Folie auf das Objekt aufgebracht sein. Zumindest ein Codepunkt kann sohin auf eine erste Folie in Form von Vorsprüngen aufgebracht und/oder in Form von Vertiefungen in die erste Folie eingearbeitet sein. Die zweite Folie kann über die bestehende erste Folie gelegt werden, welche erste Folie an der Oberfläche des Objektes anliegt.

Im Gesundheitswesen werden üblicher Weise durchsichtige Behälter wie Röhrchen zur Auf bewahrung von Proben wie Blut oder Urin verwendet. Die Behälter sind durchsichtig, da so der Inhalt des Behälters leicht visuell kontrolliert werden kann. Ein durchsichtiger Behälter hat jedoch den Nachteil, dass dessen Kanten nur schwer detektiert werden können. Das erfindungsgemäße Verfahren zeichnet sich auch dadurch aus, dass gezielt jene gut detektierbaren Punkte, nämlich die beispielsweise aufgedruckten Codepunkte, zur Detektion der Form und Lage des Behälters herangezogen werden.

Wenn der erste Code über eine Folie auf dem Objekt aufgebracht ist, kann der erste Codepunkt und/oder der zweite Codepunkt benachbart zu einer Kante der ersten Folie angeordnet sein.

Die zweite Folie, welche über den ersten Code auf das Objekt gelegt wird, kann einen zweiten Code umfassen, sodass der erste Linienpunkt und der zweite Linienpunkt durch einen zweiten Code definiert ist, wobei zumindest ein Linienpunkt auf die Oberfläche der zweiten Folie in Form von Vorsprüngen aufgebracht und/oder in Form von Vertiefungen in die zweite Folie eingearbeitet ist.

Der erste Linienpunkt und/oder der zweite Linienpunkt können benachbart zu einer Kante der zweiten Folie angeordnet sein.

Der Winkel alpha, um welchen Winkel die zweite Folie zu dem ersten Code ausgerichtet wird, kann zwischen 90° oder 180° betragen.

Zum besseren Verständnis der Erfindung wird diese anhand der nachfolgenden Figuren näher erläutert.

Es zeigen jeweils in stark vereinfachter, schematischer Darstellung, wobei
Fig. 1 die Anwendung des erfindungsgemäßen Verfahrens bei der Ausrichtung eines zweiten Codes zu einem ersten Code,
Fig. 2 die Anwendung des erfindungsgemäßen Verfahrens bei der Ausrichtung eines zweiten Codes zu einer auf der Oberfläche eines Objektes angebrachten Code,
Fig. 3 die Anwendung des erfindungsgemäßen Verfahrens bei der Ausrichtung einer unbedruckten zweiten Folie zu einem auf einer ersten Folie aufgedruckten ersten Code,
Fig. 4 die Anwendung des erfindungsgemäßen Verfahrens zur Ausrichtung einer zweiten Folie umfassend eine Line relativ zu einem ersten Code,
Fig. 5 die Anwendung des erfindungsgemäßen Verfahrens zur Ausrichtung einer zweiten Folie umfassend einen zweiten Code relativ zu einem ersten Code und
Fig. 6 die grundlegenden Elemente einer Vorrichtung zur Durchführung des erfindungsgemäßen Verfahrens zeigen, wobei der Fachmann in der Lage ist, die in den Figuren gezeigten Anwendungsbeispiele des erfindungsgemäßen Verfahrens miteinander und mit dem oben angeführten allgemeinen Beschreibungsteil der Offenbarung der Erfindung ohne eine erfinderische Tätigkeit zu kombinieren.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können.

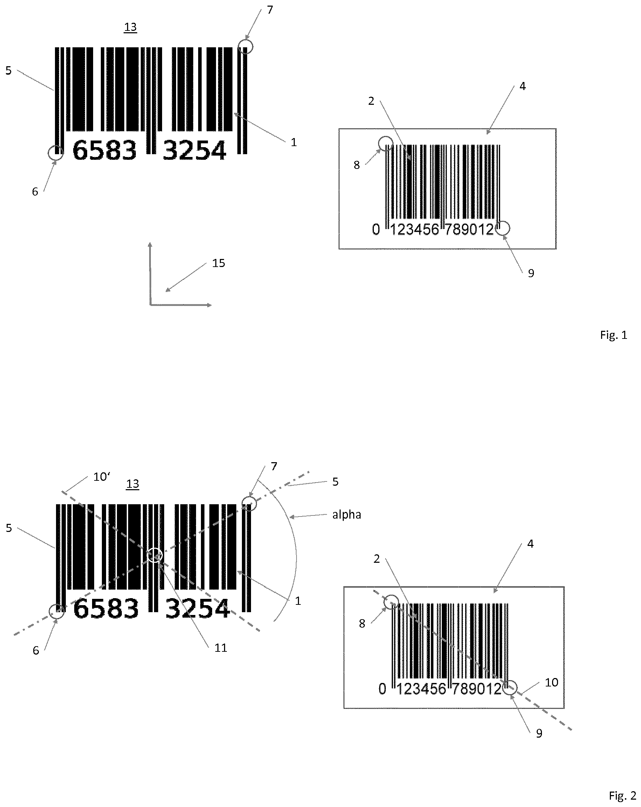

Figur 1 veranschaulicht eine Möglichkeit der Anwendung des erfindungsgemäßen Verfahrens zum Ausrichten einer zweiten Folie 4 über einen ersten Code 1, welcher erste Code 1 auf einem Objekt 13 aufgebracht ist.

Die Lage des ersten Codes 1 zu einem Koordinatensystem 15 wird durch einen berührungslos detektierbaren ersten Codepunkt 6 des ersten Codes 1 und einen detektierbaren zweiten Codepunkt 7 des ersten Codes 1 definiert. Der erste Codepunkt 6 ist der Endpunkt eines Striches des als Barcode ausgebildeten ersten Codes 1. Der zweite Codepunkt 7 ist ebenso ein Endpunkt eines weiteren Striches des ersten Codes 1. Der erste Codepunkt 6 und der zweite Codepunkt 7 sind an diagonal gegenüberliegenden Ecken der vom ersten Code 1 eingenommenen Fläche angeordnet.

Die Lage der zweiten Folie 4 wird durch einen ersten Linienpunkt 8 und einen zweiten Linienpunkt 9 definiert. Der erste Linienpunkt 8 und der zweite Linienpunkt 9 sind analog zu der Anordnung der Codepunkte 6, 7 im ersten Code 1 an diagonal gegenüberliegenden Punkten des als Barcode ausgebildeten zweiten Code 2 angeordnet.

Die Codepunkte 6, 7 und die Linienpunkte 8, 9 weisen so die größte mögliche Distanz zueinander auf.

Durch die Lage der Codepunkte 6, 7 und durch die Lage der Linienpunkte 8, 9 zueinander und/oder zu dem Koordinatensystem 15 ist die zweite Folie 4 während des Legens der zweiten Folie 4 über den ersten Code 1 zu dem ersten Code 1 ausrichtbar.

Figur 2 veranschaulicht die Anwendung des erfindungsgemäßen Verfahrens zur Ausrichtung einer einen zweiten Code 2 umfassenden zweiten Folie 4 beim Legen über einen auf einem

Objekt 13 direkt aufgebrachten ersten Code 1. Der erste Code 1 wird auf die Oberfläche des Objektes 13 aufgedruckt und liegt in Form von Vorsprüngen von der Oberfläche des Objektes 13 vor.

In einem ersten Verfahrensschritt werden ein erster Codepunkt 6 und ein zweiter Codepunkt 7 detektiert, wobei sowohl der erste Codepunkt 6 als auch der zweite Codepunkt 7 Teil des ersten Codes 1 sind. Bei dem in Figur 2 veranschaulichten Anwendungsbeispiel werden die diagonal gegenüberliegenden Endpunkte der äußersten Linien des als Barcode ausgebildeten ersten Codes 1 ausgewählt. Nach der gängigen Lehre kann durch zwei Punkte eine Gerade als geometrisches Element 5 definiert werden. Das als Gerade ausgebildete geometrische Element 5 ist durch die Koordinaten des ersten Codepunktes 6 und des zweiten Codepunktes 7 definiert.

Die zweite Folie 4, welche über den ersten Code 1 gelegt werden soll, umfasst einen zweiten Code 2, welcher wiederum durch einen Barcode ausgebildet ist. Es werden in Analogie zu obigen zwei Endpunkten die Striche des Barcodes ausgewählt, um eine Linie 10 durch einen ersten Linienpunkt 8 und einen zweiten Linienpunkt 9 zu definieren.

Das Legen der zweiten Folie 4 über den ersten Code 1 umfasst zwei Teilaufgaben. In Figur 2 ist auch die über den ersten Code 1 gelegte Linie mit dem Bezugszeichen 10' gekennzeichnet.

Erstens muss die zweite Folie 4 über den ersten Code 1 gelegt werden, was im Wesentlichen durch eine Definition eines Schnittpunktes 11 zwischen dem geometrischen Element 5 und der Linie 10 erfolgt. Der Fachmann wählt die Koordinaten des Schnittpunktes 11 in Abhängigkeit der Dimensionen des ersten Codes 1 und des zweiten Codes 2.

Bei dem in Figur 2 veranschaulichten Anwendungsbeispiel erstreckt sich die das geometrische Element 5 ausbildende Gerade von links nach rechts ansteigend und die Linie 10 von links nach rechts abfallend. Um den zweiten Code 2 im Zentrumspunkt des ersten Codes 1 zu platzieren, wählt der Fachmann die Koordinaten des Mittelpunktes der sich zwischen dem ersten Codepunkt 6 und dem zweiten Codepunkt 7 erstreckenden Gerade für den Schnittpunkt 11.

Zweitens muss der zweite Code 2 gleich wie der erste Code 1 ausgerichtet sein, um eine schnelle Lesbarkeit durch die Maschinen zu gewährleisten. Der Fachmann definiert hierzu den Winkel alpha.

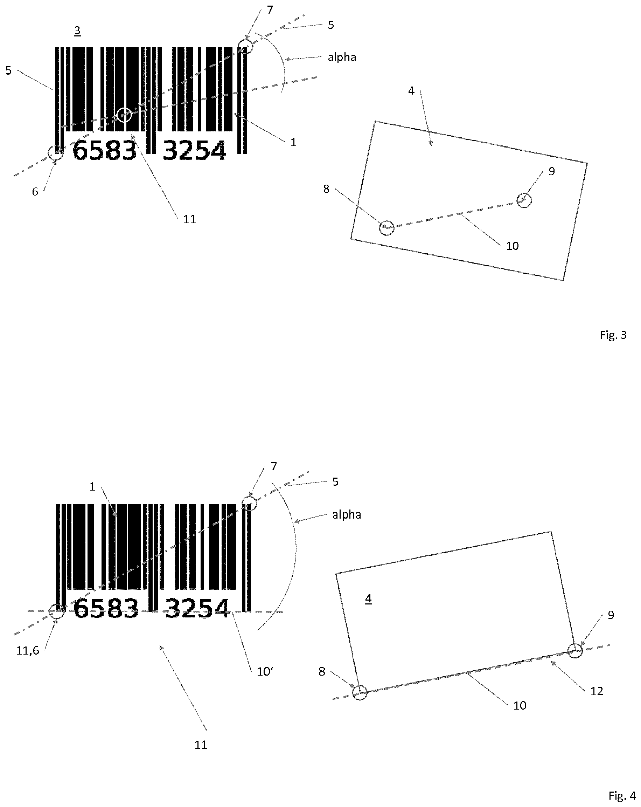

Figur 3 veranschaulicht eine weitere Anwendungsmöglichkeit des erfindungsgemäßen Verfahrens zum Ausrichten einer zweiten Folie 4 umfassend eine Linie 10 zu einer ersten Folie 3 umfassend einen ersten Code 1. Das Verfahren zu Figur 3 verläuft im Wesentlichen gleich wie das in Figur 2 dargestellte Verfahren.

Gleichwie in der Figurenbeschreibung zu Figur 2 erläutert wird ein geometrisches Element 5 durch einen ersten Codepunkt 6 und einen zweiten Codepunkt 7 gebildet. Die Linie 10 der zweiten Folie 4 wird durch einen ersten Linienpunkt 8 und einen zweiten Linienpunkt 9 gebildet.

Figur 4 veranschaulicht eine weitere Anwendungsmöglichkeit des erfindungsgemäßen Verfahrens, beim welchem eine zweite Folie 4 ohne weitere Markierungen über einen ersten Code 1 gelegt wird.

Gleichwie in dem durch Figur 2 veranschaulichten Verfahren wird ein geometrisches Element 5 durch einen ersten Codepunkt 6 und durch einen zweiten Codepunkt 7 definiert. Der erste Codepunkt 6 ist an der linken unteren Ecke und der zweite Codepunkt 7 an der rechten oberen Ecke des ersten Codes 1 angeordnet.

Die zweite Folie 4 wird in ihrer Größe durch Kanten definiert. Die untere Kante 12 der zweiten Folie 4 kann zur Definition der Line 10 herangezogen werden, wobei die Eckpunkte der Kante 12 den ersten Linienpunt 8 und den zweiten Linienpunkt 9 definieren.

Beim Legen der zweiten Folie 4 über den ersten Code 1 wird der erste Codepunkt 6 als Schnittpunkt 11 ausgewählt. In Figur 4 ist auch die über den ersten Code 1 gelegte Linie mit dem Bezugszeichen 10' gekennzeichnet. Die zweite Folie 4 wird so über den ersten Code 1 gelegt, dass sich die als geometrisches Element 5 verwendete Gerade und die Linie 10 im Schnittpunkt 11 schneiden.

Die Ausrichtung der zweiten Folie 4 über den ersten Code 1 wird weiters durch den Winkel alpha definiert. Bei dem in Figur 4 veranschaulichten Anwendungsbeispiel soll die untere Kante 12 und in Folge auch die Linie 10 beziehungsweise 10' parallel zu den unteren Endpunkten der Striche des als ersten Code 1 ausgebildeten Barcodes verlaufen. Der Fachmann errechnet den Winkel alpha aus der Breitenausdehnung und der Längenausdehnung der durch die Striche des Barcodes definierten Fläche.

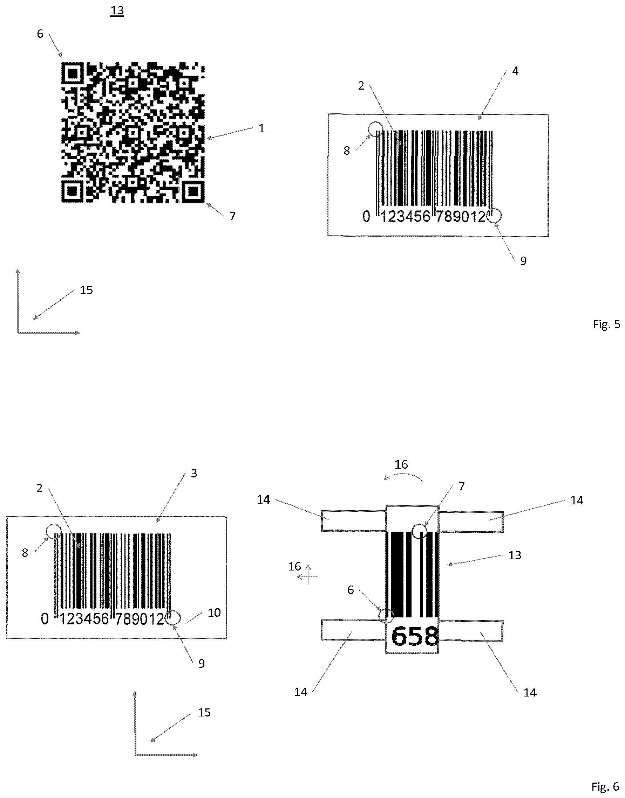

Figur 5 veranschaulicht die Anwendung des erfindungsgemäßen Verfahrens zur Ausrichtung einer zweiten Folie 4 umfassend einen als einen Strichcode ausgebildeten zweiten Code 2 zu einem als ein QR-Code ausgebildeten ersten Code 1. Der erste Code 1 und der zweite Code 2 sind sohin hinsichtlich des Ausbaus von Grund auf unterschiedlich.

Der erste Code 1 ist auf einem Objekt 13 aufgedruckt.

In einem Verfahrensschritt wird die Position des ersten Codes 1 relativ zu einem Koordinatensystem 15 definiert. Hierzu wird ein erster Codepunkt 6 und ein zweiter Codepunkt 7 des ersten Codes 1 detektiert. Bei dem durch Figur 5 veranschaulichten Verfahren werden die Positionspunkte des QR-Code zur Bestimmung der Lage des ersten Codes 1 herangezogen.

Die Lage der zweiten Folie 4 wird gleichwie bei dem durch Figur 1 veranschaulichten Verfahren durch zwei Linienpunkte 8, 9 definiert.

Es ist sohin die zweite Folie 4 während des Legens der zweiten Folie 4 über den ersten Code 1 zu dem ersten Code 1 ausrichtbar ist.

Figur 6 veranschaulicht eine Vorrichtung zum Durchführen des erfindungsgemäßen Verfahrens.

Das Objekt 13 weist die Form eines Zylinders auf, wobei Figur 6 eine Frontalansicht des Zylinders zeigt. Es sind nur Teile des ersten Codes 1 sichtbar, da die frontale Objektbreite kleiner als die Breite des ersten Codes 1 ist.

Das Objekt 13 wird an seiner Manteloberfläche durch Objekthalterungen 14 fixiert. Die Anzahl der Objekthalterungen 14 richtet sich in der Regel nach der Größe und dem Gewicht des Objektes 13. Mittels der Objekthalterungen 14 ist das Objekt 13 in Bezugnahme auf ein Koordinatensystem 15 - wie durch die Bewegungspfeile 16 angedeutet - durch Drehen und lineares Bewegen in der Ebene stellbar. Wie oben ausgeführt basiert das erfindungsgemäße Verfahren auch auf der Ausrichtung des Objektes 13 und der zweiten Folie 4 relativ zu einem Koordinatensystem.

Die Lage der zweiten Folie 4 zu dem ersten Code 1 und zu dem Koordinatensystem 15 ist wie oben beschrieben mittels der Linienpunkte 8, 9 definierbar.

Die Lage des Objektes 13 relativ zu einem Koordinatensystem oder zur zweiten Folie 4 ist über die Detektion der Codepunkte 6, 7 erfassbar. In Figur 6 sind der erste Codepunkt 6 und der zweite Codepunkt 7 in der Frontalsicht auf den ersten Code 1 sichtbar.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe können der Beschreibung entnommen werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Erster Code
- 2: Zweiter Code
- 3: Erste Folie
- 4: Zweite Folie
- 5: Geometrisches Element
- 6: Erster Codepunkt
- 7: Zweiter Codepunkt
- 8: Erster Linienpunkt
- 9: Zweiter Linienpunkt
- 10: Linie
- 11: Schnittpunkt
- 12: Kante (der zweiten Folie)
- 13: Objekt
- 14: Objekthalterungen
- 15: Koordinatensystem
- 16: Bewegungspfeile

## Patentansprüche

1. Verfahren zum Ausrichten einer zweiten Folie (3) über einen ersten Code (1),
welcher erste Code (1) auf einem Objekt (13) aufgebracht ist,
**dadurch gekennzeichnet, dass**
die Lage des ersten Codes (1) durch zumindest einen detektierbaren ersten Codepunkt (6) des ersten Codes (1) und einen detektierbaren zweiten Codepunkt (7) des ersten Codes (1) definiert wird und,
die Lage der zweiten Folie (4) durch zumindest einen detektierbaren ersten Linienpunkt (8) und einen zweiten Linienpunkt (9) definiert wird, sodass
die zweite Folie (4) während des Legens der zweiten Folie (4) über den ersten Code (1) zu dem ersten Code (1) ausrichtbar ist.

2. Verfahren zum Ausrichten einer zweiten Folie über einen ersten Code,
welcher erste Code auf einem Objekt aufgebracht ist,
**dadurch gekennzeichnet, dass**
die Lage des ersten Codes (1) durch zumindest einen ersten Codepunkt (6) des ersten Codes (1) und durch einen ersten Objektpunkt des Objektes definiert wird und
die Lage der zweiten Folie (4) durch zumindest einen detektierbaren ersten Linienpunkt (8) und einen zweiten Linienpunkt (9) definiert wird, sodass
die zweite Folie (4) während des Legens der zweiten Folie (4) über den ersten Code (1) zu dem ersten Code (1) ausrichtbar ist.

3. Verfahren nach einem der Ansprüche 1 bis 2, **dadurch gekennzeichnet, dass**
durch den ersten Codepunkt (6) und durch den zweiten Codepunkt (7) ein geometrisches Element definiert wird und
durch den ersten Linienpunkt (8) und durch den zweiten Linienpunkt (9) eine Linie (10) definiert wird,
sodass die Linie (10) während des Legens der Folie zu dem geometrischen Element (5) in einem definierten Winkel alpha und mit einem definierten Schnittpunkt (11) von geometrischen Element (5) und der Linie (10) durch Richten des Objektes (13) oder der zweiten Folie (3) ausgerichtet und gegebenenfalls um einen Abstand versetzt wird.

4. Verfahren nach einem der Ansprüche 1 bis 2, **dadurch gekennzeichnet, dass** zumindest ein Codepunkt oder Objektpunkt auf die Oberfläche des Objektes in Form von Vorsprüngen aufgebracht und/oder in die Oberfläche des Objektes in Form von Vertiefungen eingearbeitet ist.

5. Verfahren nach einem der Ansprüche 1 bis 3, **dadurch gekennzeichnet, dass** zumindest ein Codepunkt auf eine erste Folie in Form von Vorsprüngen aufgebracht und/oder in Form von Vertiefungen in die erste Folie eingearbeitet ist und die zweite Folie über die bestehende erste Folie gelegt wird, welche erste Folie an der Oberfläche des Objektes anliegt.

6. Verfahren nach Anspruch 1, 3, 4 **dadurch gekennzeichnet, dass** der erste Codepunkt und/oder der zweite Codepunkt benachbart zu einer Kante der ersten Folie angeordnet ist.

7. Verfahren nach einem der Ansprüche 1 bis 5, **dadurch gekennzeichnet, dass** der erste Linienpunkt (8) und der zweite Linienpunkt (9) durch einen zweiten Code (2) definiert sind, wobei zumindest ein Linienpunkt auf die Oberfläche der zweiten Folie (3) in Form von Vorsprüngen aufgebracht und/oder in Form von Vertiefungen in die zweite Folie eingearbeitet ist.

8. Verfahren nach einem der Ansprüche 1 bis 6, **dadurch gekennzeichnet, dass** der erste Linienpunkt (8) und/oder der zweite Linienpunkt (9) benachbart zu einer Kante (12) der zweiten Folie (3) angeordnet ist.

9. Verfahren nach einem der Ansprüche 1 bis 7, **dadurch gekennzeichnet, dass** der Winkel alpha 90° oder 180° beträgt.
